# EUROPÄISCHE PATENTSCHRIFT

(11) **EP 2 761 174 B1**
(45) Veröffentlichungstag und Bekanntmachung des Hinweises auf die Patenterteilung: **13.11.2019**
(21) Anmeldenummer: 12768718.4
(22) Anmeldetag: 26.09.2012
(51) Int. Cl.: F03D 15/00, F03D 80/70, F03D 15/10

(54) **GETRIEBE EINER WINDENERGIEANLAGE MIT HILFSANTRIEB, WINDENERGIEANLAGE UND VERFAHREN ZUM DREHEN EINER ROTORWELLE EINER WINDENERGIEANLAGE**
TRANSMISSION OF A WIND POWER PLANT HAVING AN AUXILIARY DRIVE, WIND POWER PLANT AND METHOD FOR THE ROTATION OF A ROTOR SHAFT OF A WIND POWER PLANT
TRANSMISSION D'UNE ÉOLIENNE DOTÉE D'UN ENTRAÎNEMENT AUXILIAIRE, ÉOLIENNE ET PROCÉDÉ DESTINÉ À AMENER EN ROTATION UN ARBRE DE ROTOR D'UNE ÉOLIENNE

(30) Priorität: 26.09.2011 DE 102011083431
(43) Veröffentlichungstag der Anmeldung: 06.08.2014
(73) Patentinhaber: Senvion GmbH, 22297 Hamburg (DE)
(72) Erfinder: HOPP, Eckart, 24790 Schülldorf (DE)
(74) Vertreter: Wallinger Ricker Schlotter Tostmann
(86) Internationale Anmeldenummer: PCT/EP2012/004016
(87) Internationale Veröffentlichungsnummer: WO 2013/045076

(56) Entgegenhaltungen:
- WO-A2-2011/103971
- DE-A1-102008 022 383
- DE-A1-102008 044 900
- GB-A- 555 439
- JP-A- 2007 100 558
- US-A- 4 960 006
- US-A1- 2008 181 761

## Beschreibung

Die Erfindung betrifft ein Getriebe einer Windenergieanlage mit einem Hilfsantrieb zur Drehung einer Rotorwelle der Windenergieanlage, wenigstens einer Getriebestufe mit wenigstens zwei Getriebedrehkörpern sowie einer Kupplungsvorrichtung, die zum Ankoppeln und zum Abkoppeln eines vom Hilfsantrieb antreibbaren Antriebsdrehkörpers an einen Getriebedrehkörper ausgebildet ist, der direkt oder über eine oder mehrere Getriebestufen oder Getriebedrehkörper mit der Rotorwelle verbunden ist, wobei die Kupplungsvorrichtung ausgebildet ist, den Antriebsdrehkörper zum Ankoppeln und zum Abkoppeln relativ zum Getriebedrehkörper zu bewegen. Die Erfindung betrifft ferner eine Windenergieanlage sowie ein Verfahren zum Drehen einer Rotorwelle einer Windenergieanlage.

Für Wartungsarbeiten müssen Rotoren von Windenergieanlagen gedreht und ggf. zum Beispiel zum Arretieren des Rotors genau ausgerichtet oder positioniert werden. Bei Wind ist dies zwar über die Steuerung der Blattwinkeleinstellung möglich, aber durch schlechte Dosierbarkeit dieser Steuerungsmöglichkeit sehr unkomfortabel. Bei Windstille ist der Rotor großer Windenergieanlagen nur mittels eines Hilfsantriebs positionierbar.

Es sind verschiedene Arten von Hilfsantrieben für diesen Zweck bekannt. So offenbart die gattungsgemäße DE 10 2008 044 900 B4 ein Windkraftanlagengetriebe mit zumindest einer Getriebestufe, die zumindest ein erstes und ein zweites Zahnrad umfasst, einem axial mit dem ersten oder zweiten Zahnrad verbundenen und auf dieses zentrierten dritten Zahnrad, einem zumindest das erste, zweite und dritte Zahnrad umfassenden Getriebegehäuse, einem an das Getriebegehäuse angeflanschten Hilfsantrieb, dessen Drehmoment über ein axial entlang einer von einem Motor angetriebenen Hilfsantriebswelle verschiebbares und mit der Hilfsantriebswelle drehbares viertes Zahnrad auf das dritte Zahnrad übertragbar ist, das in einem zugeschalteten Zustand des Hilfsantriebs im Eingriff mit dem vierten Zahnrad steht. Das vierte Zahnrad wird mittels eines Hebelmechanismus entlang der Hilfsantriebswelle in axialer Richtung verschoben. Dabei können zufällig die Zähne so nebeneinander liegen, dass beim Einkuppeln ein hoher Verschleiß entsteht, bzw. das Kuppeln blockiert ist.

In DE 103 34 448 B4 ist eine Windkraftanlage mit einem Rotor zum Antrieb eines Generators offenbart, wobei ein weiterer Antrieb als Drehvorrichtung vorgesehen ist, durch welche die Antriebselemente in vorgebbare Drehwinkellagen drehbar sind. Die Drehvorrichtung ist unter Last an die Antriebselemente der Windkraftanlage an- und abkoppelbar. Die Drehvorrichtung ist koaxial mit der Abtriebswelle, der so genannten schnellen Welle, der Windenergieanlage verbunden und weist eine Zahnkupplung bzw. Bogenzahnkupplung auf, die zum Ankoppeln und Abkoppeln in axialer Richtung der Abtriebswelle verschiebbar ist.

Aus WO 2011/103971 A2 ist ferner eine Positioniervorrichtung zum Bewegen eines Rotors einer Windenergieanlage mit wenigstens einem Anlagemittel und einer Antriebsvorrichtung bekannt, über die ein in Richtung der Drehachse des Rotors wirkendes Moment erzeugbar ist. Die Positioniervorrichtung umfasst einen von der Antriebsvorrichtung verschwenkbaren Mitnehmer, durch dessen Verschwenkung das Anlagemittel in eine Anlageposition überführbar ist. Dabei wird das zu drehende Teil mitbewegt.

Ausgehend von diesem Stand der Technik liegt der Erfindung die Aufgabe zugrunde, eine sichere, konstruktiv einfache und verschleißarme Möglichkeit zur Verfügung zu stellen, einen Rotor einer Windenergieanlage zu drehen und auszurichten.

Diese Aufgabe wird durch ein Getriebe einer Windenergieanlage mit einem Hilfsantrieb zur Drehung einer Rotorwelle der Windenergieanlage, wenigstens einer Getriebestufe mit wenigstens zwei Getriebedrehkörpern sowie einer Kupplungsvorrichtung, die zum Ankoppeln und zum Abkoppeln eines vom Hilfsantrieb antreibbaren Antriebsdrehkörpers an einen Getriebedrehkörper ausgebildet ist, der direkt oder über eine oder mehrere Getriebestufen oder Getriebedrehkörper mit der Rotorwelle verbunden ist, wobei die Kupplungsvorrichtung ausgebildet ist, den Antriebsdrehkörper zum Ankoppeln und zum Abkoppeln relativ zum Getriebedrehkörper zu bewegen, gelöst, wobei die Bewegung des Antriebsdrehkörpers relativ zum Getriebedrehkörper eine radiale Bewegungskomponente quer zur Rotationsachse des Antriebsdrehkörpers und/oder zur Rotationsachse des Getriebedrehkörpers aufweist, das dadurch weitergebildet ist, dass zusammenwirkende motorseitige und getriebeseitige Drehmomentstützen umfasst sind, die mit einem Spiel ineinander greifen, so dass Radialbewegungen des Hilfsantriebs oder Motors gegenüber dem Gehäuse des Getriebes aufgenommen werden, oder dass eine Drehmomentstütze umfasst ist, deren Kraftübertragung durch eine Radialbewegung des Hilfsantriebs oder Motors eingekoppelt wird.

Eine solche radiale Bewegungskomponente des Antriebsdrehkörpers relativ zum angetriebenen Getriebedrehkörper erlaubt ein sicheres und verschleißarmes in Wirkverbindung bringen des Antriebsdrehkörpers mit dem Getriebedrehkörper.

Bei dem Antriebsdrehkörper und den Getriebedrehkörpern kann es sich im Rahmen der Erfindung insbesondere um Zahnräder mit Außenzahnung, Innenzahnung oder weiteren Ausführungsformen mit Verzahnung handeln. Die Zähne können axial oder schräg ausgerichtet sein. Alternativ können auch zahnlos ablaufende Drehkörper verwendet werden, die beispielsweise mit einer Riffelung und/oder einer reibungserhöhenden Beschichtung versehen sind, beispielsweise mit Gummi- oder Moosgummibesatz. Auch Kettenantriebe oder Riemenantriebe sind im Rahmen der Erfindung umfasst.

Im Folgenden werden die verschiedenen erfindungsgemäß umfassten Antriebs- und Kupplungssysteme am häufigsten Fall der Zahnradgetriebe weiter ausgeführt.

Der Hilfsantrieb ist an einem Gehäuse des Getriebes befestigt und insofern im eingekoppelten Zustand ortsfest an der anzutreibenden Rotorwelle bzw. der anzutreibenden Abtriebswelle des Getriebes. Auf diese Weise wird das Drehmoment, das vom Hilfsantrieb erzeugt wird, vollständig auf das Getriebe übertragen.

In einer vorteilhaften Ausführung der Erfindung ist vorgesehen, dass die Bewegung des Antriebsdrehkörpers relativ zum Getriebedrehkörper eine Parallelverschiebung, eine radial-tangentiale Verschiebung oder Verschwenkung oder eine radial-axiale Verschiebung oder Verschwenkung ist. Im Fall einer Parallelverschiebung ist die Bewegung des Antriebsdrehkörpers relativ zum Getriebedrehkörper vollständig radial und es existiert keine axiale Bewegungskomponente. Falls die Parallelverschiebung die Rotationsachse des Antriebsdrehkörpers in Richtung auf die Rotationsachse des Getriebedrehkörpers bewegt, existiert auch keine tangentiale Bewegungskomponente. Die Kupplungsvorrichtung ist in diesem Fall dazu ausgebildet, eine Parallelverschiebung des Antriebsdrehkörpers und ggf. auch des Hilfsantriebs als Ganzem quer zur Rotationsachse des Antriebsdrehkörpers zu vollziehen.

Die Alternative einer radial-tangentialen Verschiebung oder Verschwenkung wird vorzugsweise mittels eines Schwenkarms verwirklicht, an dessen einem Ende der Hilfsantrieb angeordnet ist und der an seinem anderen Ende um eine Schwenkachse verschwenkbar ist, die gegenüber der Rotationsachse des Getriebedrehkörpers parallelverschoben ist.

Eine radial-axiale Verschiebung oder Verschwenkung erfolgt in ähnlicher Weise, wobei die Schwenkachse des Schwenkarms quer zur Rotationsachse des Getriebekörpers ausgerichtet ist. Diese Schwenkachse muss keinen Schnittpunkt mit der Rotationsachse des Getriebekörpers aufweisen. Bei der radial-axialen Kupplungsvariante ist die Verzahnung vorzugsweise in Form von Kegelrädern ausgebildet.

Auch Mischformen der vorgenannten Kupplungsvarianten, also beispielsweise zwischen Parallelverschiebung, radial-tangentialer und radial-axialer Kupplung, sind im Rahmen der Erfindung umfasst.

In einer alternativen Ausführungsform ist vorteilhafterweise vorgesehen, dass die Bewegung des Antriebsdrehkörpers relativ zum Getriebedrehkörper eine Verschwenkung um eine Schwenkachse ist, die quer zur Rotationsachse des Antriebsdrehkörpers verläuft. So kann der Hilfsantrieb mit dem Antriebsdrehkörper zusammen verschwenkt werden, wodurch der Antriebsdrehkörper in Eingriff mit dem Getriebedrehkörper gebracht wird. Eine solche Verschwenkung weist in Bezug auf den Antriebsdrehkörper eine große radiale Bewegungskomponente und eine sehr geringe und insbesondere im Endpunkt verschwindende Axial- bzw. Tangentialkomponente auf.

Alternativ kann der Antriebsdrehkörper auch mit einer schrägen Ablauffläche versehen sein, so dass die Rotationsachse des Antriebsdrehkörpers im eingekoppelten Zustand nicht parallel zur Drehachse des angetriebenen Getriebedrehkörpers ist, beispielsweise durch die Verwendung von Kegelrädern. Auch in einem solchen Fall kann eine Parallelverschiebung oder eine Verschwenkung vorgesehen sein.

Eine Parallelverschiebung wird vorteilhafterweise erreicht, wenn die Kupplungsvorrichtung als Exzenter ausgebildet ist, wobei insbesondere der Exzenter in einem Gehäuse des Getriebes in einer äußeren Exzenterlagerung drehbar gelagert ist und eine Hilfsantriebswelle, die mit dem Antriebsdrehkörper verbunden ist, in einer inneren Exzenterlagerung drehbar gelagert ist. Die Hilfsantriebswelle ist in diesem Fall mit der inneren Exzenterlagerung verschiebbar.

Vorzugsweise ist die Hilfsantriebswelle in einem Hilfsantriebswellenlagergehäuse drehbar gelagert, das in der inneren Exzenterlagerung drehbar gelagert ist. Dies ist eine mittelbare Lagerung der Hilfsantriebswelle in der inneren Exzenterlagerung. Das Hilfsantriebswellenlagergehäuse dreht sich bei der Drehung des Exzenters nicht mit, sondern verschiebt sich mit der exzentrischen Bohrung des Exzenters. Der Hilfsantrieb bzw. dessen Motor ist mit dem Hilfsantriebswellenlagergehäuse fest verbunden, beispielsweise verschraubt.

Wenn der Exzenter vorteilhafterweise mit einem Hebel verbunden ist, mittels dessen der Exzenter im Exzenteraußenlager drehbar ist, ist eine besonders einfache mechanische Lösung zur Bewegung des Exzenters erzielt. Alternativ kann auch ein elektrischer oder anderer Antrieb für die Bewegung des Exzenters vorgesehen sein.

Motorseitig ist vorteilhafterweise ein Spalt zwischen dem Gehäuse und dem Hilfsantriebswellenlagergehäuse angeordnet, durch den ein mit dem Exzenter verbundener Exzenterring hindurchgeführt ist, wobei der Spalt mit einer Innendichtung und einer Außendichtung abgedichtet ist. Auf diese Weise kann besonders effektiv der Exzenter mit einem Betätigungsmittel, beispielsweise mit einem Hebel verbunden werden und die Durchführung gleichzeitig abgedichtet werden. Der Exzenterring ist dabei vorzugsweise schmaler als der Exzenter selbst, weist aber an jeder Stelle eine konstante Dickenreduktion in Bezug auf die Dicke des Exzenters an der jeweiligen Stelle auf.

Erfindungsgemäß sind zusammenwirkende motorseitige und getriebeseitige Drehmomentstützen umfasst, die mit einem Spiel ineinander greifen, so dass Radialbewegungen des Hilfsantriebs oder Motors gegenüber dem Gehäuse des Getriebes aufgenommen werden. Während durch die so ineinander greifenden Drehmomentstützen rotatorische Bewegungen unterdrückt werden, werden radiale Bewegungen des Exzenters ermöglicht. Wenigstens eine der beiden Drehmomentstützen ist vorzugsweise drehbar am Motor oder am Gehäuse des Getriebes gelagert, um nichtradiale Bewegungskomponenten des Exzenters aufzunehmen.

Alternativ ist ebenfalls erfindungsgemäß eine Drehmomentstütze umfasst, deren Kraftübertragung durch eine Radialbewegung des Hilfsantriebs oder Motors eingekoppelt wird.

Alternativ kann eine Kupplung für eine Verschwenkung so ausgestaltet sein, dass der Hilfsantrieb in oder an der Gehäusewand des Getriebes um eine Achse drehbar gelagert ist und ein Schwenkantrieb zum Verschwenken der Hilfsantriebswelle mit einem Angriffspunkt zwischen dem Hilfsantrieb und dem Antriebsdrehkörper oder zum Verschwenken direkt am Antriebsdrehkörper ausgebildet ist. Ein solcher Schwenkantrieb kann auch gegen eine Zugfeder oder ein Schubfeder bzw. Druckfeder anarbeiten, so dass beim Zurückziehen des Schwenkantriebs der Antriebsdrehkörper unter Federschub- oder Federzugwirkung wieder aus dem eingekoppelten Zustand entlassen wird.

Die Getriebestufe des erfindungsgemäßen Getriebes ist vorzugsweise als Stirnradstufe oder als Planetenradstufe ausgebildet. Dabei kann das erfindungsgemäße Getriebe eine oder mehrere Getriebestufen aufweisen. Das Getriebe kann auch eine Mischung aus Stirnradstufen und Planetenradstufen aufweisen.

Der von dem Antriebsdrehkörper antreibbare Getriebedrehkörper ist vorteilhafterweise als mit der Rotorwelle oder Abtriebswelle verbundenes Zahnrad, als Zahnrad einer Stirnradstufe oder als Sonnenrad, als Planetenrad, als Planetenträger, als Hohlrad oder als Verzahnung an einem Sonnenkupplungskopf einer Planetenradstufe ausgebildet, wobei insbesondere die Rotationsachse des vom Antriebsdrehkörper antreibbaren Getriebedrehkörpers im Getriebe ortsfest angeordnet ist. Der von dem Antriebsdrehkörper im eingekoppelten Zustand angetriebene Getriebedrehkörper ist ein rotierendes Teil des Getriebes, das in Bezug auf den Hilfsantrieb bzw. den Antriebsdrehkörper ortsfest ist und geeignet ist, unmittelbar oder mittelbar einen Drehmoment vom Hilfsantrieb auf die Rotorwelle zu übertragen. Bei einem Planetengetriebe, bei dem die Planetenräder sich um das Sonnenrad herum drehen, scheiden damit die Planetenräder als Getriebedrehkörper, die von dem Antriebsdrehkörper angetrieben werden, aus. Wenn der Planetenträger in einem solchen Fall beispielsweise mit einer Verzahnung ausgestattet ist, kann der Planetenträger angetrieben werden. Im umgekehrten Fall, dass der Planetenträger ortsfest und nicht rotierend ist, kann beispielsweise eines der Planetenräder, das Hohlrad oder das Sonnenrad angetrieben werden.

In einer vorteilhaften Weiterbildung umfasst die Bewegung des Antriebsdrehkörper eine Bewegung des Hilfsantriebs und/oder der Hilfsantriebswelle.

Die der Erfindung zugrunde liegende Aufgabe wird auch durch eine Windenergieanlage mit einem erfindungsgemäßen zuvor beschriebenen Getriebe gelöst.

Schließlich wird die der Erfindung zugrunde liegende Aufgabe auch durch ein Verfahren zum Drehen einer Rotorwelle einer Windenergieanlage mit einem die Rotorwelle antreibenden Rotor und einem zuvor beschriebenen erfindungsgemäßen Getriebe mit einem Hilfsmotor gelöst, wobei wenigstens folgende Verfahrensschritte ausgeführt werden:
- der Rotor wird in einen Zustand des Stillstands oder eines weitgehend lastfreien Trudelbetriebs gebracht und/oder in einem Zustand des Stillstands oder eines weitgehend lastfreien Trudelbetriebs gehalten,
- ein Antriebsdrehkörper des Hilfsantriebs wird an einen Getriebedrehkörper, der direkt oder über eine oder mehrere Getriebestufen oder Getriebedrehkörper mit einer Rotorwelle verbunden ist, mit einer radialen Bewegungskomponente quer zur Rotationsachse des Antriebsdrehkörpers und/oder zur Rotationsachse des Getriebedrehkörpers angekoppelt,
- der Hilfsantrieb wird zur Drehung des Rotors aktiviert.

Die Ankopplung des Antriebsdrehkörpers an einen Getriebedrehkörper mit einer radialen Bewegungskomponente quer zur Rotationsachse des Antriebsdrehkörpers und/oder zur Rotationsachse des Getriebedrehkörpers bewirkt, wie bei dem erfindungsgemäßen Getriebe, eine reproduzierbare, materialschonende und sichere Ankopplung des Hilfsantriebs an die Rotorwelle. Es erfolgt eine punktuelle Ankopplung entlang des Umfangs bzw. des inneren oder äußeren Umfangs des Antriebsdrehkörpers bzw. des Getriebedrehkörpers, so dass, insbesondere im Fall von Zahnrädern, ein Blockieren der Kupplung nicht auftritt. Anders als im Fall einer axialen Verschiebung eines Zahnrads in ein anderes Zahnrad kann das verschobene Zahnrad nicht flächig an einer Zahnseitenfläche des anderen Zahnrads anliegen, so dass eine wesentlich geringere Blockierfläche auftritt als dies aus beispielsweise DE 103 34 448 B4 bekannt ist. Die verwendeten Drehkörper können somit auch deutlich weniger aufwändig hergestellt werden bei gleichzeitig sicherer Funktion.

Das erfindungsgemäße Verfahren wird vorteilhafterweise dadurch weitergebildet, dass nach erfolgter Drehung des Rotors der Hilfsantrieb deaktiviert wird und/oder der Antriebsdrehkörper vom Getriebedrehkörper mit einer radialen Bewegungskomponente quer zur Rotationsachse des Antriebsdrehkörpers und/oder zur Rotationsachse des Getriebedrehkörpers abgekoppelt wird.

Die zu den Erfindungsgegenständen, d.h. dem erfindungsgemäßen Getriebe, der erfindungsgemäßen Windenergieanlage und dem erfindungsgemäßen Verfahren genannten Eigenschaften, Merkmale und Vorteile gelten ohne Beschränkung auch für die jeweils anderen Erfindungsgegenstände, die sich aufeinander beziehen.

Weitere Merkmale der Erfindung werden aus der Beschreibung erfindungsgemäßer Ausführungsformen zusammen mit den Ansprüchen und den beigefügten Zeichnungen ersichtlich.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Ansicht eines Antriebsstrangs einer Windenergieanlage,
- Fig. 2: eine schematische Außenansicht auf das Gehäuse eines erfindungsgemäßen Getriebes,
- Fig. 3: eine schematische Darstellung einer erfindungsgemäßen Kupplungsvorrichtung,
- Fig. 4a), 4b): schematische Darstellungen der Wirkungsweise einer als Exzenter ausgebildeten Kupplungsvorrichtung,
- Fig. 5a), 5b): schematische Darstellungen der Wirkungsweise einer erfindungsgemäßen Kupplungsvorrichtung,
- Fig. 6a), 6b): schematische Darstellungen einer erfindungsgemäßen als Stirnradstufe ausgebildeten Getriebestufe,
- Fig. 7a), 7b): schematische Darstellungen einer erfindungsgemäßen als Planetenradstufe ausgebildeten Getriebestufe,
- Fig. 8: schematische Darstellungen einer erfindungsgemäßen radial-tangential wirkenden Kupplungsvorrichtung,
- Fig. 9: schematische Darstellungen einer erfindungsgemäßen radial-axial wirkenden Kupplungsvorrichtung,
- Fig. 10: eine schematische Darstellung einer alternativen erfindungsgemäßen als Planetenradstufe ausgebildeten Getriebestufe und
- Fig. 11: eine schematische Darstellung einer als Exzenter ausgebildeten Kupplungsvorrichtung.

In den Zeichnungen sind jeweils gleiche oder gleichartige Elemente und/oder Teile mit denselben Bezugsziffern versehen, so dass von einer erneuten Vorstellung jeweils abgesehen wird.

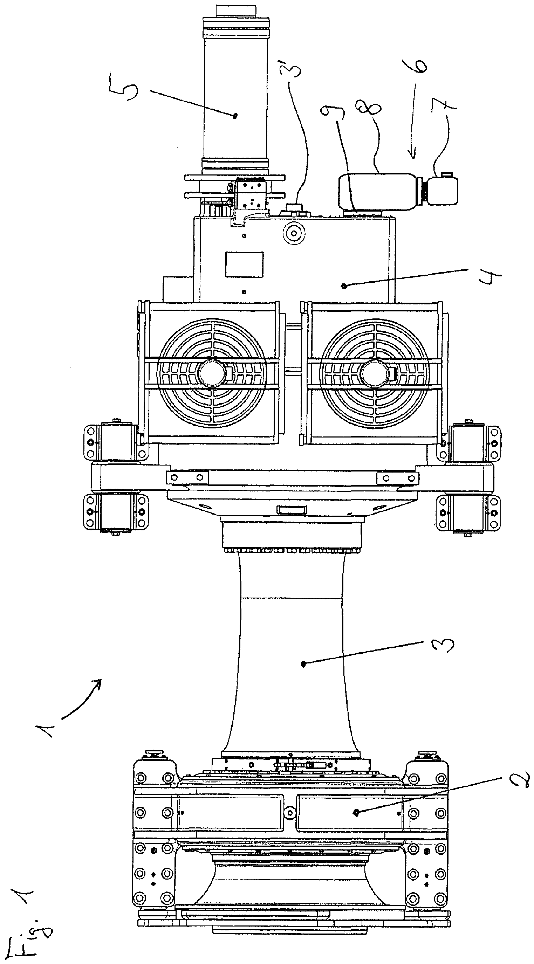

In Fig. 1 ist ein Antriebsstrang 1 einer Windenergieanlage von der Seite schematisch dargestellt. Auf der linken Seite in Fig. 1 schließt sich an den nicht dargestellten Rotor ein Rotorlager 2 an, in dem eine Rotorwelle 3 gelagert ist, die mit dem Rotor verbunden ist und von dem Rotor angetrieben wird. Die Rotorwelle 3 überträgt die Drehung des Rotors auf ein Getriebe 4, indem die langsame Drehung des Rotors in eine schnelle Drehung einer Abtriebswelle 5, die auch "schnelle Welle" genannt wird, die mit einem nicht dargestellten Generator verbunden ist, umgewandelt wird. Das Getriebe 4 verfügt dafür über eine oder mehrere nicht dargestellte Getriebestufen, wobei es sich üblicherweise um Stirnradstufen oder Planetenradstufen handelt.

An der abtriebsstrangseitigen Endfläche des Getriebes 4 ist die heraustretende, dort gelagerte Rotorwellenachse 3' dargestellt, die sich mit der Rotorwelle 3 dreht. Das Getriebe 4 gemäß Fig. 1 umfasst wenigstens eine Stirnradgetriebestufe, da die Abtriebswelle 5 radial zur Rotorwelle 3 und zur Rotorwellenachse 3' parallelverschoben ist.

An dem abtriebsstrangseitigen Ende des Getriebes 5 ist außerdem ein Hilfsantrieb 6 angebracht, der einen Motor 7, ein ein Getriebe umfassendes Vorgelege 8 und eine Hilfsantriebswelle 9 für ein nicht dargestelltes Eingriffsritzel als Antriebsdrehkörper umfasst.

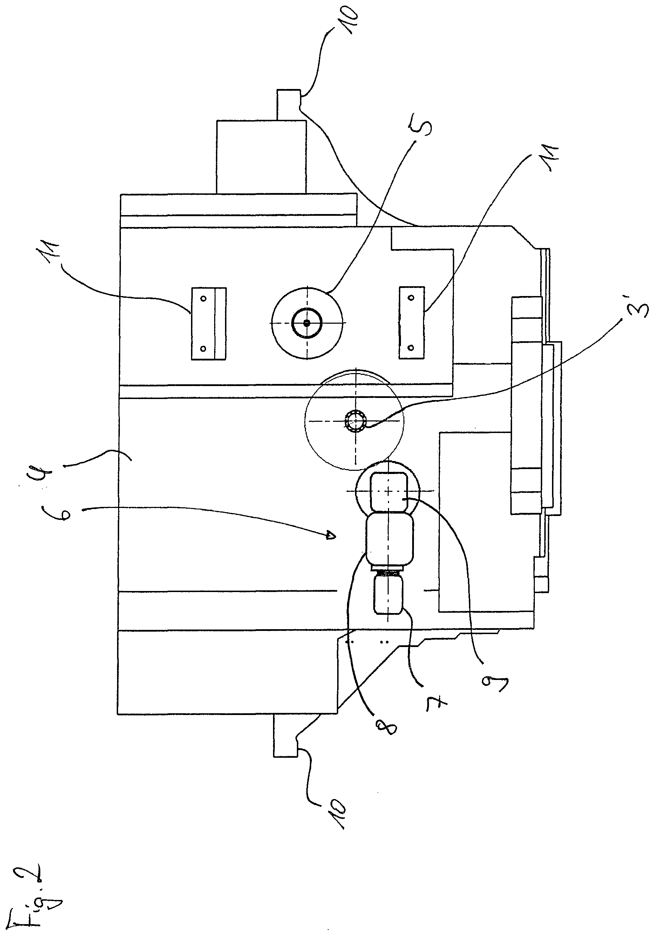

In Fig. 2 ist die abtriebsstrangseitige Rückansicht des Getriebes 4 schematisch dargestellt. Das Gehäuse des Getriebes 4 weist seitlich Drehmomentstützen 10 auf, die ein Verkippen des Getriebes 4 unter Last in der Gondel der Windenergieanlage verhindert. Zentral ist die auftretende Rotorwellenachse 3' dargestellt. Seitlich der Rotorwellenachse 3' befindet sich der Motor 7 und das Vorgelege 8 des Hilfsantriebs 6. Auch die Hilfsantriebswelle 9 des Hilfsantriebs 6 ist schematisch dargestellt.

Oberhalb der Rotorwellenachse 3', schräg versetzt, ist die Abtriebswelle 5 angeordnet. Oberhalb und unterhalb der Abtriebswelle 5 sind Bremszangenhalterungen 11 fest mit dem Gehäuse des Getriebes 4 verbunden. An diesen Bremszangenhalterungen 11 werden im eingebauten Zustand des Getriebes 4 Bremszangen angeordnet, mit denen die Abtriebswelle 5 bzw. schnelle Welle gebremst werden kann. Hierbei handelt es sich in der Regel um eine Notbremse, die nicht regelmäßig zur Bremsung des Rotors verwendet wird, um das Getriebe 4 nicht unnötig zu belasten und zu verschleißen.

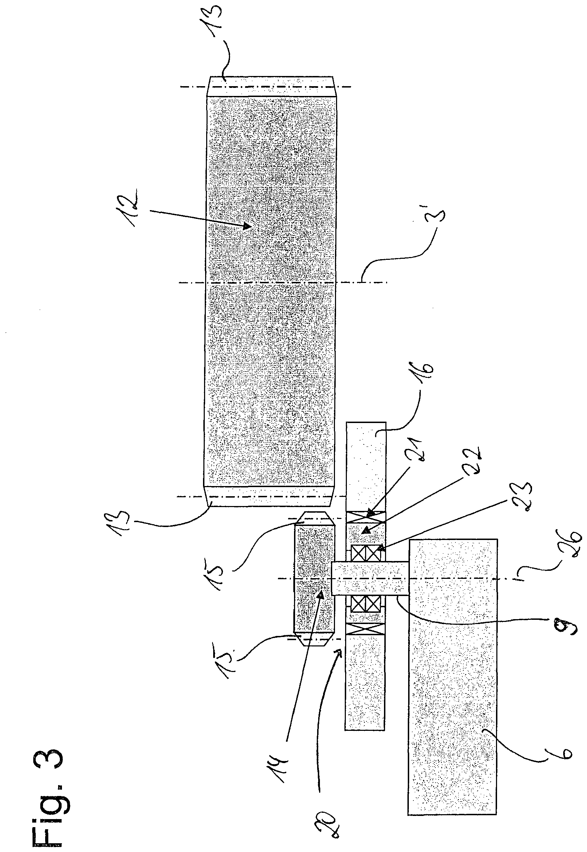

In Fig. 3 ist schematisch eine Detaildarstellung aus einem erfindungsgemäßen Getriebe dargestellt mit einem Zahnrad 12, das auf der nur schematisch angedeuteten Rotorwellenachse 3' angeordnet ist und mit dieser drehfest verbunden ist. Dies bedeutet, dass ein Drehmoment, das auf das Zahnrad 12 übertragen wird, auch auf die Rotorwellenachse 3' übertragen wird und umgekehrt. An seinem Umfang umfasst das Zahnrad 12 einen Zahnkranz 13.

Im linken Teil der Fig. 3 ist ein Hilfsantrieb 6 schematisch angedeutet, der eine Hilfsantriebswelle 9 zu einer Rotation um seine Rotationsachse 26 antreibt. Dabei wird über die Hilfsantriebswelle 9 ein Eingriffsritzel 14 mit einem Zahnkranz 15 angetrieben. Bei dem Eingriffsritzel 14 handelt es sich um einen erfindungsgemäßen Antriebsdrehkörper.

Der Hilfsantrieb 6 ist außerhalb eines Gehäuses 16, das in Fig. 3 nur ausschnittsweise dargestellt ist, angeordnet, wobei eine nicht dargestellte Verbindung zwischen dem Hilfsantrieb 6 und dem Gehäuse 16 derart besteht, dass der Hilfsantrieb 6 nicht gegenüber dem Gehäuse 16 rotiert, wenn das Eingriffsritzel 14 angetrieben wird.

Die Hilfsantriebswelle 9 ist gegenüber dem Gehäuse 16 gelagert. Dabei ist die Lagerung in Form einer erfindungsgemäßen Kupplungsvorrichtung, nämlich in Form eines Exzenters 20, ausgebildet. Der Exzenter 20 ist aufgebaut aus einem Exzenteraußenlager 21, einem Exzenter 22 und einem Exzenterinnenlager 23, in dem die Hilfsantriebswelle 9 drehbar gelagert ist. Der Exzenter 22 ist ein an seinem äußeren Umfang und seinem inneren Umfang jeweils kreisförmig ausgebildeter Körper, wobei der äußere Umfang und der innere Umfang exzentrisch, d.h. nicht konzentrisch, angeordnet sind. Eine Drehung des Exzenters 22 im Gehäuse 16 führt daher dazu, dass sich die Position der zentralen Öffnung auf einer Kreisbahn verschiebt. In Fig. 3 ist der Zustand dargestellt, dass die Hilfsantriebswelle 9 in der maximal ausgerückten Position ist. Der Zahnkranz 15 des Eingriffsritzels 14 ist dabei nicht in Wirkverbindung mit dem Zahnkranz 13 des Zahnrads 12. Es ist also der ausgekoppelte Zustand dargestellt.

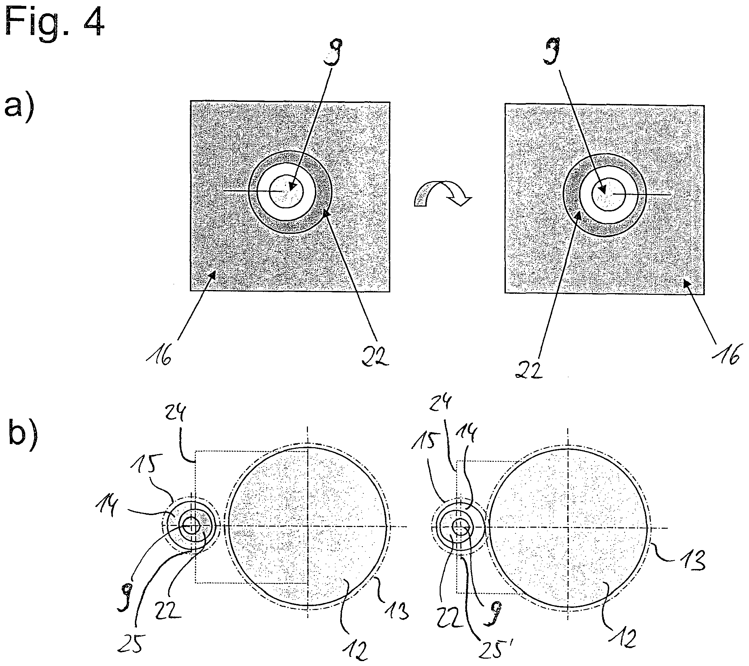

In Fig. 4a) ist eine Draufsicht auf die als Exzenter 22 ausgebildete Kupplungsvorrichtung 20 gezeigt. In der linken Hälfte der Fig. 4a) befindet sich der Exzenter 22 in einer Position innerhalb des Gehäuses 16, in der die Ritzelwelle in einer 9-Uhr-Position ausgerichtet ist. Eine Drehung um 180° bringt die Ritzelwelle 9 in eine 3-Uhr-Position. Die links dargestellte 9-Uhr-Position stellt den ausgerückten Zustand dar, die rechts dargestellte 3-Uhr-Positon den eingerückten Zustand der Kupplungsvorrichtung.

In Fig. 4b) ist der entsprechende Zustand des Eingriffsritzels 14 und des Zahnrads 12 aus Fig. 3 gemäß den Positionen aus Fig. 4a) dargestellt. In der linken Hälfte ist die ausgerückte Position dargestellt. Zur Verdeutlichung der geometrischen Verhältnisse sind außerdem Hilfslinien eingezeichnet, nämlich eine Mittellinie 24 durch das Zentrum des Exzenters 22 und Mittellinien 25, 25' durch das Zentrum der Ritzelwelle bzw. Hilfsantriebswelle 9. Während das Zentrum des Exzenters 22, dargestellt durch die Mittellinie 24, in der linken und der rechten Darstellung ortsfest ist, bewegt sich durch die Drehung des Exzenters 22 die Mittellinie 25, 25' durch die Hilfsantriebswelle 9 bzw. die Ritzelwelle von links von der Mittellinie 24 nach rechts von der Mittellinie 24, d.h. auf das Zahnrad 12 zu. Auf diese Weise wird das Antriebsrad 14 an das Zahnrad 12 angekoppelt. Eine weitere Drehung des Exzenters 22 führt zu einem Auskoppeln oder Entkoppeln des Eingriffsritzels 14 vom Zahnrad 12.

Bevorzugt weist die Kupplungsvorrichtung eine, nicht dargestellte, Verriegelung im eingekuppelten Zustand auf.

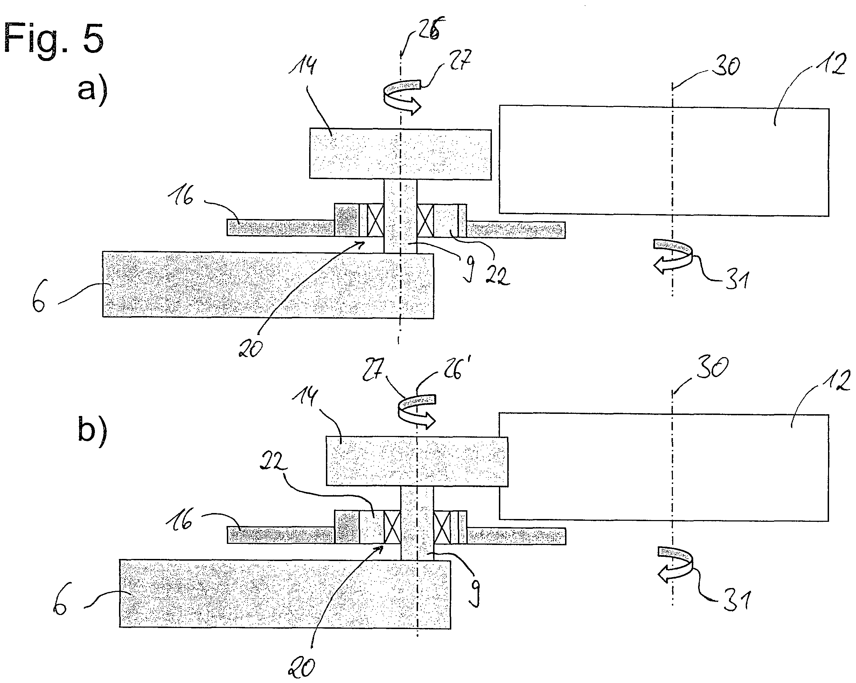

In Fig. 5 ist eine schematische Draufsicht von oben der Kupplungsvorrichtung gemäß Figuren 4a) und 4b) gezeigt. In Fig. 5a) ist die Kupplungsvorrichtung im ausgerückten, also entkoppelten Zustand dargestellt. Der Exzenter 22 befindet sich in der in Fig. 4a) links dargestellten 9-Uhr-Position, so dass die Rotationsachse 26 des Eingriffsritzels 14 und der Hilfsantriebswelle 9, die sich in Drehrichtung 27 dreht, relativ weit von der Rotationsachse 30 der Rotorwelle 3 entfernt befindet.

In Fig. 5b) ist die Situation nach einer Umdrehung des Exzenters 22 um 180° in die 3-Uhr-Positon dargestellt, in der die Rotationsachse 26' der Hilfsantriebswelle 9 bzw. Ritzelwelle nunmehr an die Rotationsachse 30 der Rotorwelle 3 angenähert worden ist, so dass sich das Eingriffsritzel 14 mit dem Zahnrad 12 im Eingriff befindet. Die Rotationsrichtung 31 des Zahnrads 12 um die Rotationsachse 30 der Rotorwelle ist umgekehrt zu der Rotationsrichtung 27 der Hilfsantriebswelle 9 und des Eingriffsritzels 14.

Diese Art der Kupplung, die in den Figuren 3 bis 5 dargestellt ist, ist sehr einfach realisierbar und sehr robust. Aufgrund der geringen Berührungsfläche zwischen dem Eingriffsritzel 14 und dem Zahnrad 12 sind ein geringer Verschleiß und eine verschwindende Blockierwahrscheinlichkeit der Kupplungsvorrichtung erreicht.

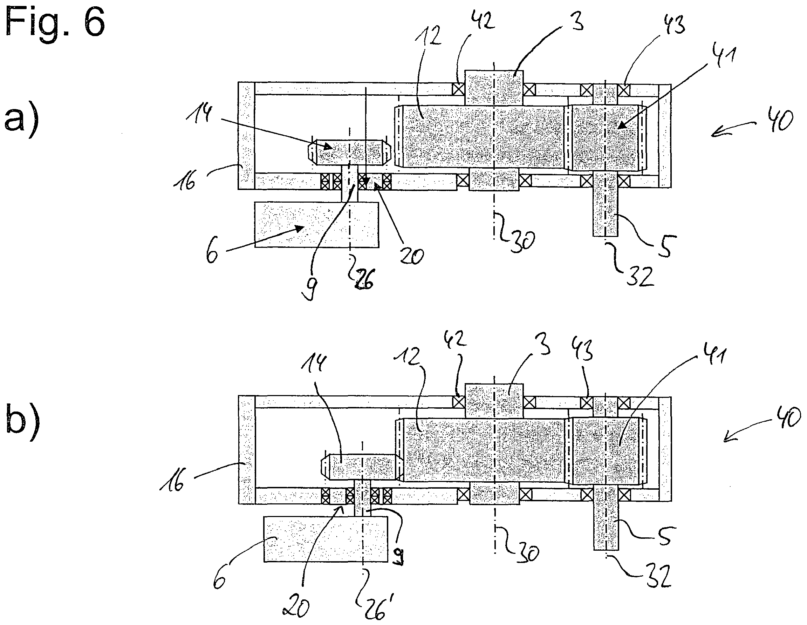

In Figuren 6a), 6b) sind die eingerückten und ausgerückten Zustände einer Stirnradstufe eines erfindungsgemäßen Getriebes bzw. Stirnradgetriebes 40 dargestellt. Die Kupplungsvorrichtung ist im Wesentlichen so ausgestaltet wie in den Figuren 3 bis 5 dargestellt. Das Stirnradgetriebe 40 verfügt neben dem Zahnrad 12, das mit der Rotorwelle 3 drehfest verbunden ist, die in Lagern 42 im Gehäuse 16 gelagert ist, noch über ein Ritzel 41 mit geringerem Umfang, das in Eingriff mit dem Zahnrad 12 steht und drehfest mit der Abtriebswelle 5 verbunden ist, die sich um eine Rotationsachse 32 dreht. Die Abtriebswelle 5 ist in einem eigenen Lager 43 im Gehäuse 16 gelagert. Die Wahl des Zahnrads 12 mit einem großen Umfang und des Ritzels 41 mit einem geringeren Umfang führt dazu, dass die Drehgeschwindigkeit der Rotorwelle 3 in eine höhere Drehgeschwindigkeit der Abtriebswelle 5 umgesetzt wird. Im in Fig. 6 dargestellten Ausführungsbeispiel greift das Eingriffsritzel 14 des Hilfsantriebs 6 an dem Zahnrad 12 auf der Rotorwelle 3 direkt an. Bevorzugt ist eine Ausführungsform, bei der das Zahnrad 12 zwar koaxial zur Rotorwelle 3, jedoch über eine vorgeschaltete Planetenstufe mit dieser gekoppelt ist.

In Fig. 6b) ist das gleiche Stirnradgetriebe 40 wie in Fig. 6a) mit eingerückten Hilfsantrieb 6 und Eingriffsritzel 14 dargestellt.

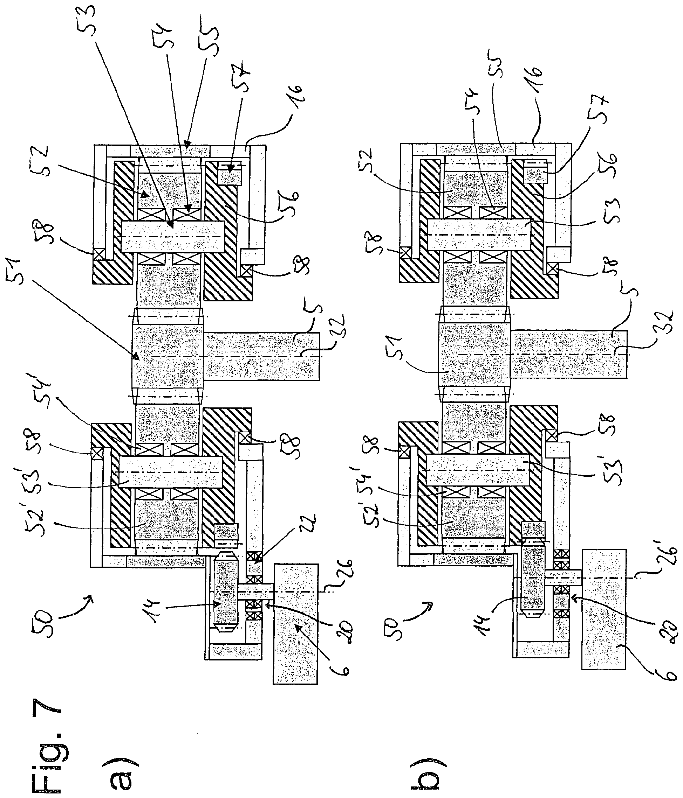

In Fig. 7 ist die Alternative eines Planetengetriebes 50 bzw. einer Planetengetriebestufe dargestellt. Der Hilfsantrieb 6 und die Kupplungsvorrichtung, die auf einem Exzenter 22 basiert, sind wiederum wie vorstehend beschrieben ausgeführt. Dieses ist in Fig. 7a) im ausgekoppelten bzw. ausgerückten Zustand dargestellt und in Fig. 7b) im eingerückten bzw. eingekoppelten Zustand.

Das Planetengetriebe 50 bzw. die Planetengetriebestufe verfügt über ein Sonnenrad 51, das auf der Abtriebswelle 5 drehfest aufgesetzt ist. Das Sonnenrad 51 mit relativ geringem Umfang steht im Eingriff mit den Zahnrädern mehrerer Planetenräder 52, 52', die auf eigenen Planetenradachsen 53, 53' angeordnet sind. Die Planetenräder 52, 52' rollen jeweils auf Planetenradlagern 54, 54' gegenüber den Planetenradachsen 53, 53' ab. Die Planetenradachsen 53, 53' sind in einem Planetenträger 65 gehalten, der wiederum drehbar auf Lagern 58 im Gehäuse 16 des Planetengetriebes 50 angerordnet ist. Ein Hohlrad 55 ist außerdem fest mit dem Gehäuse 16 verbunden. Das Hohlrad 55 umgibt Planetenräder 52, 52' und ist mit einer Innenverzahnung ausgestattet. Das Planetengetriebe 50 weist somit ein feststehendes Hohlrad 55 und einen drehenden Planetenträger 56 auf.

In dem in Fig. 7 dargestellten Ausführungsbeispiel ist der Planetenträger 56 an einer Kante mit einer Verzahnung 57 ausgestattet, in die im eingerückten Zustand das Eingriffsritzel 14 des Hilfsantriebs 6 eingreift. Somit wird in dem in Fig. 7 dargestellten Ausführungsbeispiel der Planetenträger 56 durch den Hilfsantrieb 6 angetrieben. Der Planetenträger 56 ist direkt oder über weitere Getriebestufen mit der Rotorwelle der Windenergieanlage verbunden.

Bei dem Planetengetriebe 50 gemäß Fig. 7 könnte im Rahmen der vorliegenden Erfindung auch das Sonnenrad 51 angetrieben werden, wenn der Planetenträger 56 für den Hilfsantrieb 6 genügend Freiraum lassen würde. Auch könnte auf der Abtriebswelle 5 ein weiteres Zahnrad angeordnet sein, das vom Hilfsantrieb 6 antreibbar ist. Im Fall eines feststehenden Planetenträgers 56 wäre es möglich, das sich in diesem Fall drehende Hohlrad 55, eines oder mehrere der Planetenräder 52, 52' oder das Sonnenrad 51 bzw. die Abtriebswelle 5 über ein eigens dafür vorgesehenes Zahnrad anzutreiben.

Die in Fig. 6 und 7 gezeigten Ausführungsbeispiele sind derart zu verallgemeinern, dass der Hilfsantrieb 6 mit dem Eingriffsritzel 14 grundsätzlich an jeder Stufe eines mehrstufigen Getriebes angreifen kann. Bei den gezeigten Wellen muss es sich also nicht notwendigerweise um die Rotorwelle 3 und die Abtriebswelle 5 handeln, sondern es kann sich dabei auch jeweils um eine Welle handeln, die zu einer vorgeschalteten oder nachgeschalteten Getriebestufe führt.

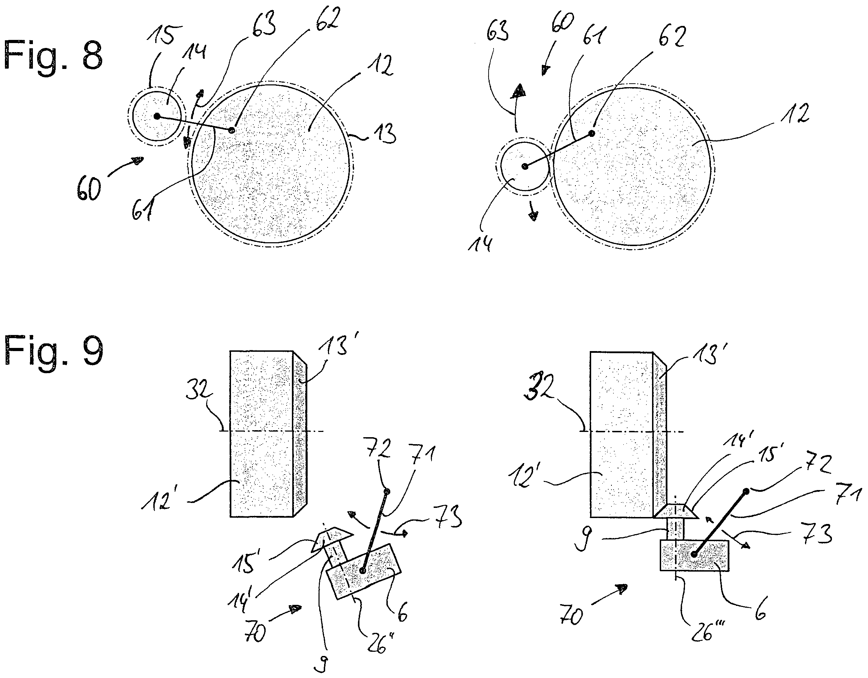

In Fig. 8 ist schematisch eine Draufsicht auf eine erfindungsgemäße radial-tangential wirkende Kupplungsvorrichtung 60 dargestellt. Diese umfasst ein Zahnrad 12 mit einem Zahnkranz 13, das beispielsweise mit einer Abtriebswelle 5 verbunden ist. Vom Hilfsantrieb ist nur das Eingriffsritzel 14 mit seinem Zahnkranz 15 dargestellt. Das Eingriffsritzel 14 ist auf einem Schwenkarm 61 angeordnet, dessen Schwenkachse 62 parallelverschoben und parallel zur Rotationsachse des Zahnrads 12 auf der Abtriebswelle ist. Die Bewegungsrichtung 63 ist mit Pfeilen dargestellt. Die entsprechende Bewegung weist eine radiale und eine tangentiale Komponente zum Zahnrad 12 auf. Im linken Teil von Fig. 8 ist die radial-tangentiale Kupplungsvorrichtung 60 im ausgekoppelten Zustand, im rechten Teil im eingekoppelten Zustand dargestellt.

Fig. 9 zeigt schematisch eine seitliche Ansicht einer erfindungsgemäßen radial-axialen Kupplungsvorrichtung 70. Die Rotationsachse des Zahnrads 12' ist die Rotationsachse 32 der nicht dargestellten Abtriebswelle 5. Das Zahnrad 12' weist auf seiner Stirnfläche einen Kegelrad-Zahnkranz 13' auf. Der Hilfsantrieb 6 mit einem mit einem Kegelrad-Zahnkranz 15' ausgestattetem Eingriffsritzel 14', das auf einer Hilfsantriebswelle 9 um eine Rotationsachse 26" rotierend am Hilfsantrieb 6 angeordnet ist, ist an einem Schwenkarm 71 um eine Schwenkachse 72 schwenkbar. Diese ist quer, insbesondere senkrecht, zur Rotationsachse 32 des Zahnrads 12' ausgerichtet, und schneidet diese im Beispiel der Fig. 9 nicht. Durch die Schwenkbewegung 73, die mit Pfeilen dargestellt ist, wird die jeweilige Kegelrad-Verzahnung des Eingriffsritzels 14' in Eingriff mit derjenigen des Zahnrads 12' gebracht. Diese Bewegung hat eine radiale und eine axiale Komponente. Im linken Teil von Fig. 9 ist die radial-axiale Kupplungsvorrichtung 70 im ausgekoppelten Zustand, im rechten Teil im eingekoppelten Zustand dargestellt.

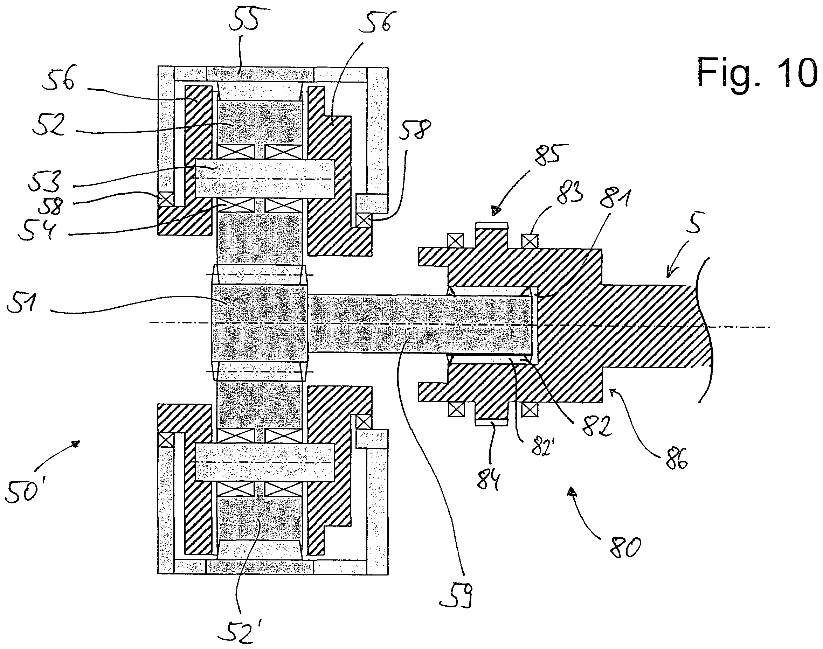

In Fig. 10 ist eine alternative erfindungsgemäße Stufe eines Planetengetriebes 50' dargestellt. Anders als in dem Ausführungsbeispiel gemäß Fig. 7 greift im Ausführungsbeispiel gemäß Fig. 10 der Hilfsantrieb nicht an einer Verzahnung des Planetenträgers 56 an, sondern an einer Außenverzahnung 84 eines Teils einer Sonnenkupplung 80.

Bei einem Planetengetriebe ist das Sonnenrad 51 mit einer Sonnenwelle 59 verbunden. Damit eine gleichmäßige Kraftübertragung von allen Planetenrädern 52, 52' auf das Sonnenrad 51 und umgekehrt gewährleistet ist, ist das Sonnenrad 51 und die Sonnenwelle 59 nicht starr gelagert, sondern in einer Sonnenkupplung 80. Dafür weist die Abtriebswelle 5 einen als Hohlwelle ausgebildeten Sonnenkupplungskopf 86 auf. Das vom Sonnenrad 51 abgewandte Ende der Sonnenwelle 59 ist mittels einer Bogenzahnkupplung in dem Hohlraum 81 des Sonnenkupplungskopfes 86 gelagert, wobei eine Außenverzahnung 82 der Sonnenwelle 59 in eine Innenverzahnung 82' des Hohlraums 81 des Sonnenkupplungskopfes 86 eingreift. In diesem sogenannten Stellpunkt des Sonnenrades 51 erlaubt die Sonnenkupplung 80 weder eine axiale noch eine radiale Bewegung der Sonnenwelle 59. Jedoch kann das Sonnenrad 51 am anderen Ende der Sonnenwelle 59 in radialer Richtung ausweichen und so Kräftedifferenzen zwischen den Planetenrädern 52' ausgleichen.

Im Falle der in Fig. 10 dargestellten Getriebestufe des Planetengetriebes 50' weist der Sonnenkupplungskopf 86 eine Außenverzahnung für ein Eingriffsritzel eines in Fig. 10 nicht dargestellten Hilfsantriebs an einem Eingriffspunkt 85 für den Hilfsantrieb auf, der wie in den Figuren 1 bis 9 ausgebildet sein kann. Dieser Eingriffspunkt 85 befindet sich in Fig. 10 am Stellpunkt des Sonnenrads 51, also dem Punkt, an dem die Sonnenwelle 59 radial fixiert ist. Diese Variante ist besonders bevorzugt, wenn ein Getriebe keine Stirnradstufe aufweist.

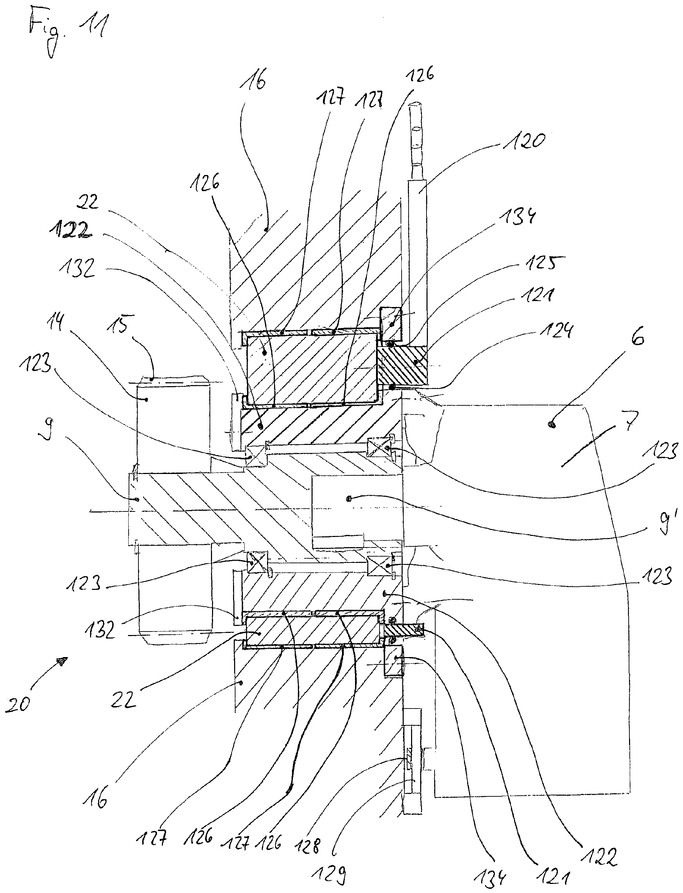

In Fig. 11 ist ein weiteres Ausführungsbeispiel einer als Exzenter ausgebildeten Kupplungsvorrichtung 20 dargestellt. In einer Aussparung im Gehäuse 16 des weiter nicht dargestellten Getriebes ist in einem Exzenteraußenlager 127 ein Exzenter 22 gelagert. Das Exzenteraußenlager 127 ist im vorliegenden Beispiel als Gleitlager mit zwei im Querschnitt "L"-förmigen Buchsen aus Messing oder Lagerbronze ausgebildet. Es können auch beispielsweise Nadellager verwendet werden.

Ebenfalls "L"-förmige Gleitlagerbuchsen formen ein Exzenterinnenlager 126 und dienen zur Lagerung eines Hilfsantriebswellenlagergehäuses 122 im Exzenter 22. Anders als der Exzenter 22 dreht sich das Hilfsantriebswellenlagergehäuse 122 bei einer Drehung des Exzenters 22 nicht mit. Im Inneren des Hilfsantriebswellenlagergehäuses ist die Hilfsantriebswelle 9, die über einen Zapfen 9' vom Motor des Hilfsantriebs 6 angetrieben wird, über ein Hilfsantriebswellenlager 123 gelagert. Der Motor 7 ist über Schraubverbindungen mit dem Hilfsantriebswellenlagergehäuse 122 verbunden.

Motorseitig und getriebeseitig ist der Hohlraum mit dem Exzenter 22 jeweils mittels eines Deckels 132, 134 abgeschlossen, so dass die innenliegenden Komponenten in axialer Richtung gesichert sind. Gehäuse 16, Hilfsantriebswellenlagergehäuse 122 und Deckel 132, 134 engen den Hohlraum mit dem Exzenter 22 axial in beiden Richtungen ein. Motorseitig schließt sich an den Exzenter 22 ein Exzenterring 122 geringerer Dicke an, mittels dessen ein Hebel 120 mit dem Exzenter 22 verbunden ist, mit dem der Exzenter 22 gedreht werden kann, um das Eingriffsritzel 14 radial einzurücken. Die inneren und äußeren Konturen des Exzenterrings 122 sind konzentrisch mit den inneren und äußeren Konturen des Exzenters 22. Am Exzenterring 122 sind jeweils eine ringförmige Innendichtung 124 und eine ringförmige Außendichtung 125 angeordnet, die ein Auslaufen von Getriebeöl oder Schmierstoffen verhindern.

Am Gehäuse 16 des Getriebes ist eine getriebeseitige Drehmomentstütze 129 in Form einer Stange befestigt, auf der eine motorseitige Drehmomentstütze 128 mit einer Bohrung gleitend aufgesteckt ist. Bei einer Drehung des Exzenters 22 wird das Hilfsantriebswellenlagergehäuse 122 mit dem daran befestigten Motor 7 des Hilfsantriebs 6 gegenüber dem Gehäuse 16 bewegt. Diese relative Bewegung wird durch das Spiel bzw. die Möglichkeit der Verschiebung der motorseitigen Drehmomentstütze 128 auf der getriebeseitigen Drehmomentstütze 129 aufgefangen. Gegenüber Drehungen der Hilfsantriebswelle 9 ist der Motor 7 über die Kombination der Drehmomentstützen 128, 129 abgestützt. Die motorseitige Drehmomentstütze 128 ist gegenüber dem Hilfsantrieb 6 drehbar gelagert, um die seitliche Bewegung des Motors 7 bei Drehung des Exzenters 22 zu erlauben.

Alternativ kann die motorseitige Drehmomentstütze 128 auch zylindrisch ausgebildet sein und die getriebeseitige Stütze 129 als ein Schienenpaar, zwischen denen die zylindrische motorseitige Drehmomentstütze 128 mit einem Abschnitt mit verringertem Durchmesser eingeklemmt ist. Bei dieser Konstruktion ist die zylindrische motorseitige Drehmomentstütze 128 zwischen den Schienen der getriebeseitigen Drehmomentstütze 129 frei drehbar, so dass sie fest mit dem Motor 7 bzw. dem Hilfsantrieb 6 verbunden sein kann.

### Bezugszeichenliste

- 1: Antriebsstrang
- 2: Rotorlager
- 3: Rotorwelle
- 3': Rotorwellenachse
- 4: Getriebe
- 5: Abtriebswelle
- 6: Hilfsantrieb
- 7: Motor
- 8: Vorgelege
- 9: Hilfsantriebswelle
- 9': Zapfen
- 10: Drehmomentstütze
- 11: Bremszangenhalterung
- 12, 12': Zahnrad
- 13: Zahnkranz
- 13': Kegelrad-Zahnkranz
- 14, 14': Eingriffsritzel
- 15: Zahnkranz
- 15': Kegelrad-Zahnkranz
- 16: Gehäuse
- 20: Kupplungsvorrichtung
- 21: Exzenteraußenlager
- 22: Exzenter
- 23: Exzenterinnenlager
- 24: Mittellinie durch Exzenter
- 25, 25': Mittellinie durch Ritzelwelle
- 26 - 26'": Rotationsachse der Ritzelwelle
- 27: Rotationsrichtung der Ritzelwelle
- 30: Rotationsachse der Rotorwelle
- 31: Rotationsrichtung der Rotorwelle
- 32: Rotationsachse der Abtriebswelle
- 40: Stirnradgetriebe
- 41: Ritzel
- 42, 43: Lager
- 50, 50': Planetengetriebe
- 51: Sonnenrad
- 52, 52': Planetenrad
- 53, 53': Planetenradachse
- 54, 54': Planetenradlager
- 55: Hohlrad
- 56: Planetenträger
- 57: Verzahnung
- 58: Lager
- 59: Sonnenwelle
- 60: radial-tangentiale Kupplungsvorrichtung
- 61: Schwenkarm
- 62: Schwenkachse des Schwenkarms
- 63: radial-tangentiale Bewegungsrichtung
- 70: radial-axiale Kupplungsvorrichtung
- 71: Schwenkarm
- 72: Schwenkachse des Schwenkarms
- 73: radial-axiale Bewegungsrichtung
- 80: Sonnenkupplung
- 81: Hohlraum für Bogenzahnkupplung
- 82: Außenverzahnung einer Bogenzahnkupplung
- 82': Innenverzahnung einer Bogenzahnkupplung
- 83: Lager
- 84: Verzahnung für Hilfsantrieb
- 85: Eingriffspunkt des Hilfsantriebs
- 86: Sonnenkupplungskopf
- 120: Hebel
- 121: Exzenterring
- 122: Hilfsantriebswellenlagergehäuse
- 123: Hilfsantriebswellenlager
- 124: Innendichtung
- 125: Außendichtung
- 126: Exzenterinnenlager
- 127: Exzenteraußenlager
- 128: motorseitige Drehmomentstütze
- 129: getriebeseitige Drehmomentstütze
- 132: Deckel
- 134: Deckel

## Patentansprüche

1. Getriebe (4, 40, 50, 50') einer Windenergieanlage mit einem Hilfsantrieb (6) zur Drehung einer Rotorwelle (3) der Windenergieanlage, wenigstens einer Getriebestufe mit wenigstens zwei Getriebedrehkörpern (12, 12', 41; 51, 52, 52', 55, 56; 86) sowie einer Kupplungsvorrichtung (20, 60, 70), die zum Ankoppeln und zum Abkoppeln eines vom Hilfsantrieb (6) antreibbaren Antriebsdrehkörpers (14, 14') an einen Getriebedrehkörper (12, 12', 41; 51, 52, 52', 55, 56; 86) ausgebildet ist, der direkt oder über eine oder mehrere Getriebestufen oder Getriebedrehkörper (12, 12', 41; 51, 52, 52', 55, 56; 86) mit der Rotorwelle (3) verbunden ist, wobei die Kupplungsvorrichtung (20, 60, 70) ausgebildet ist, den Antriebsdrehkörper (14, 14') zum Ankoppeln und zum Abkoppeln relativ zum Getriebedrehkörper (12, 12', 41; 51, 52, 52', 55, 56; 86) zu bewegen wobei die Bewegung des Antriebsdrehkörpers (14, 14') relativ zum Getriebedrehkörper (12, 12', 41; 51, 52, 52', 55, 56; 86) eine radiale Bewegungskomponente quer zur Rotationsachse (26 - 26"') des Antriebsdrehkörpers (14, 14') und/oder zur Rotationsachse des Getriebedrehkörpers (12, 12', 41; 51, 52, 52', 55, 56; 86) aufweist, wobei zusammenwirkende motorseitige und getriebeseitige Drehmomentstützen (128, 129) umfasst sind, die mit einem Spiel ineinander greifen, so dass Radialbewegungen des Hilfsantriebs (6) oder Motors (7) gegenüber dem Gehäuse (16) des Getriebes (4, 40, 50, 50') aufgenommen werden, oder wobei eine Drehmomentstütze um fasst ist, deren Kraftübertragung durch eine Radialbewegung des Hilfsantriebs (6) oder Motors (7) eingekoppelt wird.

2. Getriebe 4, 40, 50, 50') nach Anspruch 1, **dadurch gekennzeichnet, dass** die Bewegung des Antriebsdrehkörpers (14, 14') relativ zum Getriebedrehkörper (12, 12', 41; 51, 52, 52', 55, 56; 86) eine Parallelverschiebung, eine radial-tangentiale Verschiebung oder Verschwenkung (63) oder eine radial-axiale Verschiebung oder Verschwenkung (73) ist.

3. Getriebe (4, 40, 50, 50') nach Anspruch 1, **dadurch gekennzeichnet, dass** die Bewegung des Antriebsdrehkörpers (14, 14') relativ zum Getriebedrehkörper (12, 12', 41; 51, 52, 52', 55, 56; 86) eine Verschwenkung um eine Schwenkachse (72) ist, die quer zur Rotationsachse (26 - 26"') des Antriebsdrehkörpers (14, 14')verläuft.

4. Getriebe (4, 40, 50, 50') nach einem der Ansprüche 1 bis 3, **dadurch gekennzeichnet, dass** die Kupplungsvorrichtung (20) als Exzenter (22) ausgebildet ist, wobei insbesondere der Exzenter (22) in einem Gehäuse (16) des Getriebes (4, 40, 50, 50') in einer äußeren Exzenterlagerung (23, 127) drehbar gelagert ist und eine Hilfsantriebswelle (9), die mit dem Antriebsdrehkörper (14, 14') verbunden ist, in einer inneren Exzenterlagerung (21, 126) drehbar gelagert ist.

5. Getriebe (4, 40, 50, 50') nach Anspruch 4, **dadurch gekennzeichnet, dass** die Hilfsantriebswelle (9) in einem Hilfsantriebswellenlagergehäuse (122) drehbar gelagert ist, das in der inneren Exzenterlagerung (126) drehbar gelagert ist.

6. Getriebe (4, 40, 50, 50') nach Anspruch 4 oder 5, **dadurch gekennzeichnet, dass** der Exzenter (22) mit einem Hebel (120) verbunden ist, mittels dessen der Exzenter (22) im Exzenteraußenlager (21, 127) drehbar ist.

7. Getriebe (4, 40, 50, 50') nach Anspruch 5 oder 6, **dadurch gekennzeichnet, dass** motorseitig ein Spalt zwischen dem Gehäuse (16) und dem Hilfsantriebswellenlagergehäuse (122) angeordnet ist, durch den ein mit dem Exzenter (22) verbundener Exzenterring (121) hindurchgeführt ist, wobei der Spalt mit einer Innendichtung (124) und einer Außendichtung (125) abgedichtet ist.

8. Getriebe (4, 40, 50, 50') nach einem der Ansprüche 1 bis 7, **dadurch gekennzeichnet, dass** die Getriebestufe als Stirnradstufe oder als Planetenradstufe ausgebildet ist.

9. Getriebe (4, 40, 50, 50') nach einem der Ansprüche 1 bis 8, **dadurch gekennzeichnet, dass** der von dem Antriebsdrehkörper (14, 14') antreibbare Getriebedrehkörper (12, 12', 41; 51, 52, 52', 55, 56; 86) als mit der Rotorwelle (3) oder Abtriebswelle (5) verbundenes Zahnrad (12, 12'), als Zahnrad (41) einer Stirnradstufe oder als Sonnenrad (51), als Planetenrad (52, 52'), als Planetenträger (56), als Hohlrad (55) oder als Verzahnung (84) an einem Sonnenkupplungskopf (86) einer Planetenradstufe ausgebildet ist, wobei insbesondere die Rotationsachse des vom Antriebsdrehkörper (14, 14') antreibbaren Getriebedrehkörpers (12, 12', 41; 51, 52, 52', 55, 56; 86) im Getriebe (4, 40, 50, 50') ortsfest angeordnet ist.

10. Getriebe (4, 40, 50, 50') nach einem der Ansprüche 1 bis 9, **dadurch gekennzeichnet, dass** die Bewegung des Antriebsdrehkörpers (14, 14') eine Bewegung des Hilfsantriebs (6) und/oder der Hilfsantriebswelle (9) umfasst.

11. Windenergieanlage mit einem Getriebe (4, 40, 50, 50') nach einem der Ansprüche 1 bis 10.

12. Verfahren zum Drehen einer Rotorwelle (3) einer Windenergieanlage mit einem die Rotorwelle (3) antreibenden Rotor und einem Getriebe (4, 40, 50, 50') mit einem Hilfsmotor (6) nach einem der Ansprüche 1 bis 10, wobei wenigstens folgende Verfahrensschritte ausgeführt werden:
- der Rotor wird in einen Zustand des Stillstands oder eines weitgehend lastfreien Trudelbetriebs gebracht und/oder in einem Zustand des Stillstands oder eines weitgehend lastfreien Trudelbetriebs gehalten,
- ein Antriebsdrehkörper (14, 14') des Hilfsantriebs (6) wird an einen Getriebedrehkörper (12, 12', 41; 51, 52, 52', 55, 56; 86), der direkt oder über eine oder mehrere Getriebestufen oder Getriebedrehkörper (12, 12', 41; 51, 52, 52', 55, 56; 86) mit einer Rotorwelle (3) verbunden ist, mit einer radialen Bewegungskomponente quer zur Rotationsachse (26 - 26"') des Antriebsdrehkörpers (14, 14') und/oder zur Rotationsachse des Getriebedrehkörpers (12, 12', 41; 51, 52, 52', 55, 56; 86) angekoppelt,
- der Hilfsantrieb (6) wird zur Drehung des Rotors aktiviert.

13. Verfahren nach Anspruch 12, **dadurch gekennzeichnet, dass** nach erfolgter Drehung des Rotors der Hilfsantrieb (6) deaktiviert wird und/oder der Antriebsdrehkörper (14, 14') vom Getriebedrehkörper (12, 12', 41; 51, 52, 52', 55, 56; 86) mit einer radialen Bewegungskomponente quer zur Rotationsachse (26 - 26"') des Antriebsdrehkörpers (14, 14') und/oder zur Rotationsachse des Getriebedrehkörpers (12, 12', 41; 51, 52, 52', 55, 56; 86) abgekoppelt wird.

## Claims

1. A transmission (4, 40, 50, 50') of a wind energy installation comprising an auxiliary drive (6) for rotating a rotor shaft (3) of the wind energy installation, at least one transmission stage comprising at least two transmission rotary bodies (12, 12', 41; 51, 52, 52', 55, 56; 86) and a clutch device (20, 60, 70) which is arranged to engage and disengage a drive rotary body (14, 14') which can be driven by the auxiliary drive (6) with a transmission rotary body (12, 12', 41; 51, 52, 52', 55, 56; 86), which is connected to the rotor shaft (3) directly or via one or more transmission stages or transmission rotary bodies (12, 12', 41; 51, 52, 52', 55, 56; 86), wherein the clutch device (20, 60, 70) is arranged to move the drive rotary body (14, 14') relative to the transmission rotary body (12, 12', 41; 51, 52, 52', 55, 56; 86) for the purpose of engaging and disengaging, wherein the movement of the drive rotary body (14, 14') relative to the transmission rotary body (12, 12', 41; 51, 52, 52', 55, 56; 86) has a radial movement component transverse to the axis of rotation (26 - 26"') of the drive rotary body (14, 14') and/or to the axis of rotation of the transmission rotary body (12, 12', 41; 51, 52, 52', 55, 56; 86), wherein cooperating motor-side and transmission-side torque arms (128, 129) are provided which engage with one another with play so that radial movements of the auxiliary drive (6) or the motor (7) with respect to the housing (16) of the transmission (4, 40, 50, 50') are absorbed, or wherein a torque arm is provided whose power transmission is engaged by a radial movement of the auxiliary drive (6) or the motor (7).

2. The transmission (4, 40, 50, 50') according to claim 1, **characterised in that** the movement of the drive rotary body (14, 14') relative to the transmission rotary body (12, 12', 41; 51, 52, 52', 55, 56; 86) is a parallel displacement, a radial tangential displacement or a radial tangential pivoting movement (63) or a radial axial displacement or a radial axial pivoting movement (73).

3. The transmission (4, 40, 50, 50') according to claim 1, **characterised in that** the movement of the drive rotary body (14, 14') relative to the transmission rotary body (12, 12', 41; 51, 52, 52', 55, 56; 86) is a pivoting movement about a pivot axis (72) which extends transversely to the axis of rotation (26 - 26"') of the drive rotary body (14, 14').

4. The transmission (4, 40, 50, 50') according to any one of the claims 1 to 3, **characterised in that** the clutch device (20) is constructed as an eccentric (22), in particular wherein the eccentric (22) is rotatably supported in a housing (16) of the transmission (4, 40, 50, 50') in an outer eccentric bearing (23, 127) and an auxiliary drive shaft (9), which is connected to the drive rotary body (14, 14'), is rotatably supported in an inner eccentric bearing (21, 126).

5. The transmission (4, 40, 50, 50') according to claim 4, **characterised in that** the auxiliary drive shaft (9) is rotatably supported in an auxiliary drive shaft bearing housing (122) which is rotatably supported in the inner eccentric bearing (126).

6. The transmission (4, 40, 50, 50') according to claim 4 or 5, **characterised in that** the eccentric (22) is connected to a lever (120) by means of which the eccentric (22) can be rotated in the outer eccentric bearing (21, 127).

7. The transmission (4, 40, 50, 50') according to claim 5 or 6, **characterised in that** a gap is arranged on the motor side between the housing (16) and the auxiliary drive shaft bearing housing (122), through which gap an eccentric ring (121) which is connected to the eccentric (22) is passed, wherein the gap is sealed with an inner seal (124) and an outer seal (125).

8. The transmission (4, 40, 50, 50') according to any one of the claims 1 to 7, **characterised in that** the transmission stage is constructed as a spur transmission stage or as a planetary transmission stage.

9. The transmission (4, 40, 50, 50') according to any one of the claims 1 to 8, **characterised in that** the transmission rotary body (12, 12', 41; 51, 52, 52', 55, 56; 86), which can be driven by the drive rotary body (14, 14'), is constructed as a gear wheel (12, 12') which is connected to the rotor shaft (3) or the output shaft (5), as a gear wheel (41) of a spur transmission stage or as a sun gear (51), as a planet gear (52, 52'), as a planet carrier (56), as a ring gear (55) or as a toothing (84) on a sun gear coupling head (86) of a planetary transmission stage, wherein in particular the axis of rotation of the transmission rotary body (12, 12', 41; 51, 52, 52', 55, 56; 86), which can be driven by the drive rotary body (14, 14'), is arranged in the transmission (4, 40, 50, 50') in a fixed position.

10. The transmission (4, 40, 50, 50') according to any one of the claims 1 to 9, **characterised in that** the movement of the drive rotary body (14, 14') comprises a movement of the auxiliary drive (6) and/or of the auxiliary drive shaft (9).

11. A wind energy installation comprising a transmission (4, 40, 50, 50') according to any one of the claims 1 to 10.

12. A method of rotating a rotor shaft (3) of a wind energy installation comprising a rotor driving the rotor shaft (3) and a transmission (4, 40, 50, 50') with an auxiliary motor (6) according to any one of the claims 1 to 10, wherein at least the following process steps are carried out:
- the rotor is brought into a state of standstill or a largely load-free spinning operation and/or is maintained in a state of standstill or a largely load-free spinning operation,
- a drive rotary body (14, 14') of the auxiliary drive (6) is engaged with a transmission rotary body (12, 12', 41; 51, 52, 52', 55, 56; 86) which is connected directly or via one or more transmission stages or transmission rotary bodies (12, 12', 41; 51, 52, 52', 55, 56; 86) to a rotor shaft (3), by means of a radial movement component transverse to the axis of rotation (26 - 26"') of the drive rotary body (14, 14') and/or to the axis of rotation of the transmission rotary body (12, 12', 41; 51, 52, 52', 55, 56; 86),
- the auxiliary drive (6) is activated in order to rotate the rotor.

13. The method according to claim 12, **characterised in that**, after the rotor has been rotated, the auxiliary drive (6) is deactivated and/or the drive rotary body (14, 14') is disengaged from the transmission rotary body (12, 12', 41; 51, 52, 52', 55, 56; 86) by means of a radial movement component transverse to the axis of rotation (26 - 26"') of the drive rotary body (14, 14') and/or to the axis of rotation of the transmission rotary body (12, 12', 41; 51, 52, 52', 55, 56; 86).

## Revendications

1. Transmission (4, 40, 50, 50') d'une éolienne avec un entraînement auxiliaire (6) servant à faire tourner un arbre de rotor (3) de l'éolienne, au moins un étage de transmission avec au moins deux corps rotatifs de transmission (12, 12', 41 ; 51, 52, 52', 55, 56 ; 86) ainsi qu'un dispositif de couplage (20, 60, 70), qui est réalisé pour accoupler et pour désaccoupler un corps rotatif d'entraînement (14, 14') pouvant être entraîné par l'entraînement auxiliaire (6) à un corps rotatif de transmission (12, 12', 41 ; 51, 52, 52', 55, 56 ; 86), qui est relié directement ou par l'intermédiaire d'un ou de plusieurs étages de transmission ou corps rotatifs de transmission (12, 12', 41 ; 51, 52, 52', 55, 56 ; 86) à l'arbre de rotor (3), dans lequel le dispositif de couplage (20, 60, 70) est réalisé pour déplacer le corps rotatif d'entraînement (14, 14') servant à l'accouplement et au désaccouplement par rapport au corps rotatif de transmission (12, 12', 41 ; 51, 52, 52', 55, 56 ; 86),
le déplacement du corps rotatif d'entraînement (14, 14') par rapport au corps rotatif de transmission (12, 12', 41 ; 51, 52, 52', 55, 56 ; 86) présentant une composante de déplacement radiale de manière transversale par rapport à l'axe de rotation (26 - 26''') du corps rotatif d'entraînement (14, 14') et/ou par rapport à l'axe de rotation du corps rotatif de transmission (12, 12', 41 ; 51, 52, 52', 55, 56 ; 86), dans laquelle sont compris des supports de couple de rotation (128, 129) coopérant situés côté moteur et côté transmission, qui viennent en prise les uns avec les autres avec un jeu de sorte que des déplacements radiaux de l'entraînement auxiliaire (6) ou du moteur (7) par rapport au boîtier (16) de la transmission (4, 40, 50, 50') sont absorbés ou dans laquelle
un support de couple de rotation est compris, dont la transmission de force est injectée par un déplacement radial de l'entraînement auxiliaire (6) ou du moteur (7).

2. Transmission (4, 40, 50, 50') selon la revendication 1, **caractérisée en ce que** le déplacement du corps rotatif d'entraînement (14, 14') par rapport au corps rotatif de transmission (12, 12', 41 ; 51, 52, 52', 55, 56 ; 86) est un coulissement parallèle, un coulissement ou un pivotement radialement tangentiel (63) ou un coulissement ou pivotement radialement axial (73).

3. Transmission (4, 40, 50, 50') selon la revendication 1, **caractérisée en ce que** le déplacement du corps rotatif d'entraînement (14, 14') par rapport au corps rotatif de transmission (12, 12', 41 ; 51, 52, 52', 55, 56 ; 86) est un pivotement autour d'un axe de pivotement (72), qui s'étend de manière transversale par rapport à l'axe de rotation (26 - 26''') du corps rotatif d'entraînement (14, 14').

4. Transmission (4, 40, 50, 50') selon l'une quelconque des revendications 1 à 3, **caractérisée en ce que** le dispositif de couplage (20) est réalisé sous la forme d'un excentrique (22), dans laquelle en particulier l'excentrique (22) est monté de manière à pouvoir tourner dans un boîtier (16) de la transmission (4, 40, 50, 50') dans un palier d'excentrique (23, 127) extérieur et un arbre d'entraînement auxiliaire (9), qui est relié au corps rotatif d'entraînement (14, 14'), est monté de manière à pouvoir tourner dans un palier d'excentrique (21, 126) intérieur.

5. Transmission (4, 40, 50, 50') selon la revendication 4, **caractérisée en ce que** l'arbre d'entraînement auxiliaire (9) est monté de manière à pouvoir tourner dans un boîtier de palier d'arbre d'entraînement auxiliaire (122), qui est monté de manière à pouvoir tourner dans le palier d'excentrique intérieur (126).

6. Transmission (4, 40, 50, 50') selon la revendication 4 ou 5, **caractérisée en ce que** l'excentrique (22) est relié à un levier (120), au moyen duquel l'excentrique (22) peut tourner dans le palier extérieur d'excentrique (21, 127).

7. Transmission (4, 40, 50, 50') selon la revendication 5 ou 6, **caractérisée en ce qu'**est disposée côté moteur une fente entre le boîtier (16) et le boîtier de palier d'arbre d'entraînement auxiliaire (122), par laquelle une bague excentrique (121) reliée à l'excentrique (22) est guidée de part en part, dans laquelle la fente est étanchéifiée avec un joint d'étanchéité intérieur (124) et un joint d'étanchéité extérieur (125).

8. Transmission (4, 40, 50, 50') selon l'une quelconque des revendications 1 à 7, **caractérisée en ce que** l'étage de transmission est réalisée sous la forme d'un étage de roue frontale ou sous la forme d'un étage de roue planétaire.

9. Transmission (4, 40, 50, 50') selon l'une quelconque des revendications 1 à 8, **caractérisée en ce que** le corps rotatif de transmission (12, 12', 41 ; 51, 52, 52', 55, 56 ; 86) pouvant être entraîné par le corps rotatif d'entraînement (14, 14') est réalisé sous la forme d'une roue dentée (12, 12') reliée à l'arbre de rotor (3) à l'arbre de sortie (5), sous la forme d'une roue dentée (41) d'un étage de roue frontale ou sous la forme d'une roue solaire (51), sous la forme d'une roue planétaire (52, 52'), sous la forme d'une cage de transmission planétaire (56), sous la forme d'une couronne (55) ou sous la forme d'une denture (84) au niveau d'une tête de couplage solaire (86) d'un étage de roue solaire, dans laquelle en particulier l'axe de rotation du corps rotatif de transmission (12, 12', 41 ; 51, 52, 52', 55, 56 ; 86) pouvant être entraîné par le corps rotatif d'entraînement (14, 14') est disposé de manière stationnaire dans la transmission (4, 40, 50, 50').

10. Transmission (4, 40, 50, 50') selon l'une quelconque des revendications 1 à 9, **caractérisée en ce que** le déplacement du corps rotatif d'entraînement (14, 14') comprend un déplacement de l'entraînement auxiliaire (6) et/ou de l'arbre d'entraînement auxiliaire (9).

11. Eolienne avec une transmission (4, 40, 50, 50') selon l'une quelconque des revendications 1 à 10.

12. Procédé servant à faire tourner un arbre de rotor (3) d'une éolienne avec un rotor entraînant l'arbre de rotor (3) et une transmission (4, 40, 50, 50') avec un moteur auxiliaire (6) selon l'une quelconque des revendications 1 à 10, dans lequel au moins des étapes de procédé suivantes sont exécutées :
- le rotor est amené dans un état d'arrêt ou d'un mode ralenti largement sans charge et/ou est maintenu dans un état d'arrêt ou d'un mode ralenti largement sans charge,
- un corps rotatif d'entraînement (14, 14') de l'entraînement auxiliaire (6) est accouplé à un corps rotatif de transmission (12, 12', 41 ; 51, 52, 52', 55, 56 ; 86), qui est relié directement ou par l'intermédiaire d'un ou de plusieurs étages de transmission ou corps rotatifs de transmission (12, 12', 41 ; 51, 52, 52', 55, 56 ; 86) à un arbre de rotor (3), avec une composante de déplacement radiale de manière transversale par rapport à l'axe de rotation (26 - 26''') du corps rotatif d'entraînement (14, 14') et/ou par rapport à l'axe de rotation du corps rotatif de transmission (12, 12', 41 ; 51, 52, 52', 55, 56 ; 86),
- l'entraînement auxiliaire (6) est activé aux fins de la rotation du rotor.

13. Procédé selon la revendication 12, **caractérisé en ce qu'**après une rotation réalisée avec succès du rotor, l'entraînement auxiliaire (6) est désactivé et/ou le corps rotatif d'entraînement (14, 14') est désaccouplé du corps rotatif de transmission (12, 12', 41 ; 51, 52, 52', 55, 56 ; 86) avec une composante de déplacement radiale de manière transversale par rapport à l'axe de rotation (26 - 26''') du corps rotatif d'entraînement (14, 14') et/ou par rapport à l'axe de rotation du corps rotatif de transmission (12, 12', 41 ; 51, 52, 52', 55, 56 ; 86).
